# Europäisches Patentamt

# European Patent Office

# Office européen des brevets

(11) Veröffentlichungsnummer: **0 215 299**
**A2**

(12) # EUROPÄISCHE PATENTANMELDUNG

(21) Anmeldenummer: **86111196.1**

(22) Anmeldetag: **13.08.86**

(51) Int. Cl.⁴: **H 02 K 11/00**

(30) Priorität: **17.09.85 DE 3533065**

(43) Veröffentlichungstag der Anmeldung: **25.03.87**
**Patentblatt 87/13**

(84) Benannte Vertragsstaaten: **DE FR GB IT**

(71) Anmelder: **ROBERT BOSCH GMBH, Postfach 50, D-7000 Stuttgart 1 (DE)**

(72) Erfinder: **Lemke, Werner, Birkenweg 21, D-7120 Bietigheim-Bissingen (DE)**
Erfinder: **Sohnle, Rüdiger, Dipl.-Ing. (FH), Feuerbacher Weg 19, D-7000 Stuttgart 1 (DE)**

(54) Adapter für einen Drehstromgenerator.

(57) Es wird ein Adapter für einen Drehstromgenerator vorgeschlagen, der der Umstellung von als axiale Bolzenabgänge ausgebildeten elektrischen Ursprungsanschlüssen am Drehstromgenerator in radial verlaufende Bolzenabgänge dient und aus einem Kunststoff-Formteil besteht, in welches elektrisch leitende, vorzugsweise aus einem geeigneten Blech bestehende Flachteile eingelegt sind, die Durchtrittsbohrungen für die ursprünglichen axialen Bolzenabgänge bilden, mit denen gleichzeitig mit der Herstellung der elektrischen Verbindung der Adapter an dem Drehstromgenerator festgeschraubt wird. Die Flachteile gehen in zu einer radial abschließenden Stirnwandung geführte und jetzt radial vorspringende Bolzenabgänge über.

20227

1916/ot/wi
31.7.1985 Zr

Firma Robert Bosch GmbH., 7000 Stuttgart 1

Adapter für einen Drehstromgenerator

Stand der Technik

Die Erfindung geht aus von einem Adapter nach der Gattung
des Hauptanspruchs. Üblicherweise haben Drehstromgeneratoren zur Herstellung der elektrischen Anschlüsse, die beispielsweise mit B+, D+, W u.dgl. bezeichnet werden, Bolzenabgänge, die sich in axialer Richtung von einem Lagerschild
ausgehend, üblicherweise dem B-Lagerschild erstrecken und
zum Teil auch unregelmäßig über dieses Lagerschild verteilt
sind. Dabei handelt es sich bei dem B-Lagerschild um das dem
Bürstenhalter nahe oder diesen lagernde Gehäuseteil; als
A-Lagerschild ist das antriebsseitige Gehäuseteil des Drehstromgenerators bezeichnet. Bei diesen Bolzenabgängen handelt es sich normalerweise um Schraubbolzen, auf die dann
mit ösenartigen Endstücken versehene elektrische Kabelverbindungen aufgeschraubt werden (siehe Bosch-Technische Unterrichtung; Drehstromgeneratoren für Kfz, VDT-UBE 315/30 vom
Dezember 1970).

Eine Änderung solcher axialer Bolzenabgänge in beispielsweise radiale Abgänge, die dann bevorzugt hin-

-/-

1916/ot/wi
31.7.85                 - 2 -


tereinanderliegen und evt. auch einen Steckanschluß bilden können,
ist bei den bekannten Seriengeneratoren besonders umständlich, da dies nicht nur eine Änderung der Gleichrichteranordnung und -verteilung, sondern auch des
Schleifringlagerschildes bedeuten würde.

Der Erfindung liegt daher die Aufgabe zugrunde, einen
Adapter zu schaffen, der in der Lage ist, durch einfachen Anbau von außen beibehaltene axiale elektrische Anschlüsse, sogenannte Bolzenabgänge, in radiale elektrische        Anschlüsse umzuwandeln.


Vorteile der Erfindung

Der erfindungsgemäße Adapter löst diese Aufgabe mit den
kennzeichnenden Merkmalen des Hauptanspruchs und hat den
Vorteil, daß auch an fertige Seriengeneratoren der Adapter nachträglich zur Umwandlung der Bolzenabgänge von
axial in radial montiert werden kann, so daß die vorliegenden Generatorkonzepte nicht beeinflußt werden und
insbesondere auch kein Eingriff in die Serienfertigung
erforderlich ist. Ein solcher Adapter bildet daher als
Bauteilkombination eine kostengünstige Lösung und hat
insbesondere auch Vorteile bezüglich der Ersatzteillagerhaltung.

Dabei ist ferner von Vorteil, daß die der vorliegenden
Erfindung zugrundeliegende Adapterausbildung als sogenannte Rucksacklösung zu verstehen ist, wobei bis
auf die Montage des Adapters an dem jeweiligen Seriengenerator alle Baugruppen ebenfalls großseriengerecht

1916/ot/wi
31.7.85                 - 3 -

hergestellt, geformt und montiert werden können.

Durch die in den Unteransprüchen aufgeführten Maßnahmen
sind vorteilhafte Weiterbildungen und Verbesserungen des
im Hauptanspruch angegebenen Adapters möglich. Besonders
vorteilhaft ist die sichere Lagerung für den Adapter
durch das Festschrauben an den axialen Bolzenabgängen,
durch welche auch sofort die erforderlichen elektrischen
Verbindungen hergestellt werden, mit der Möglichkeit,
die Schraubstellen durch zusätzliche Kunststoffstopfen
abzudecken, die jedenfalls zunächst Teil der Kunststoffgußform der Adaptereinheit sind.

Vorteilhaft ist ferner die Möglichkeit, die zueinander
getrennt und daher elektrisch isolierend in das Formteil des Adapters eingelegten metallischen Leiter einstückig so auszubilden, daß diese am Drehstromgeneratorrand in ebenfalls radiale Bolzenabgänge, also Schraubstutzen übergehen, an die dann, jeweils mit unterschiedlichen vorgegebenen Gewinden, die einzelnen
elektrischen Kabel in der üblichen Weise festschraubbar
sind.

Zeichnung

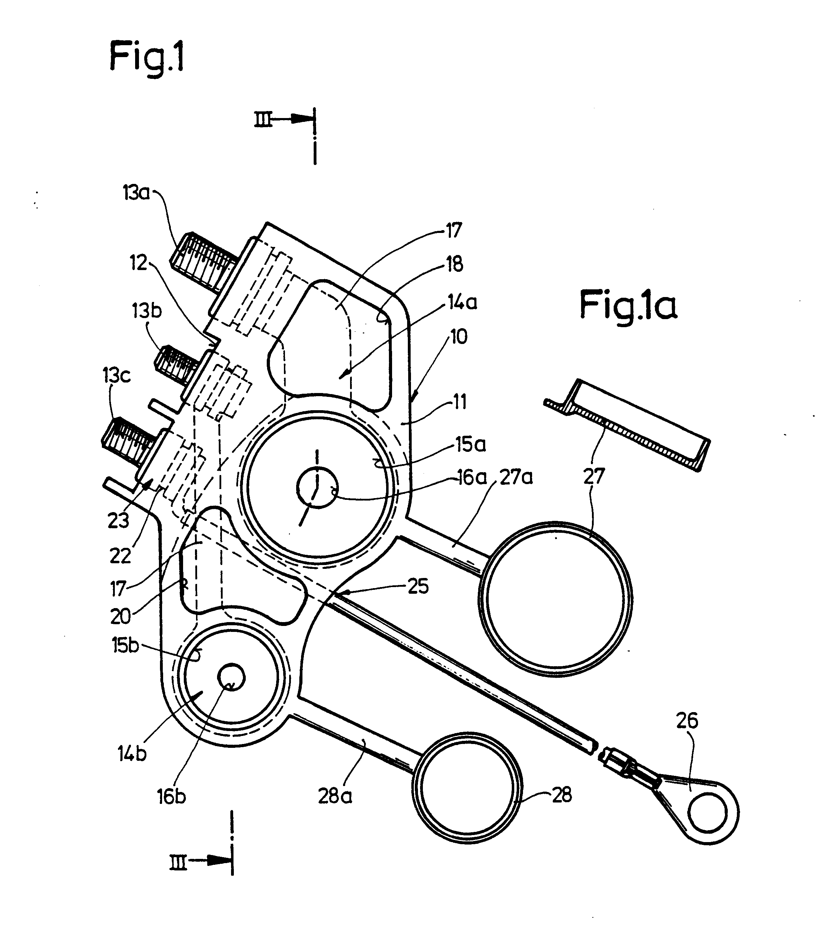

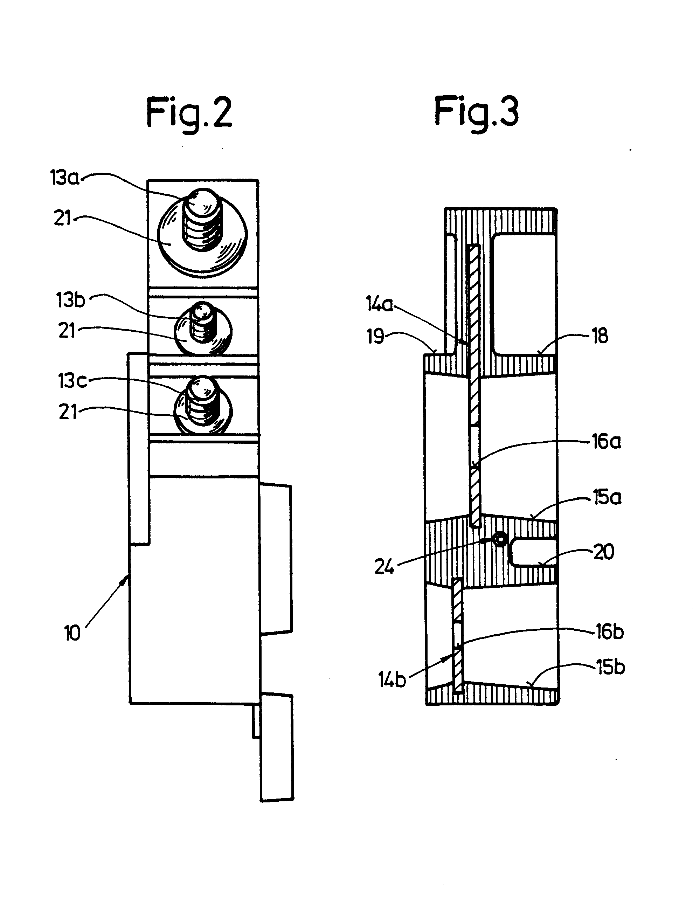

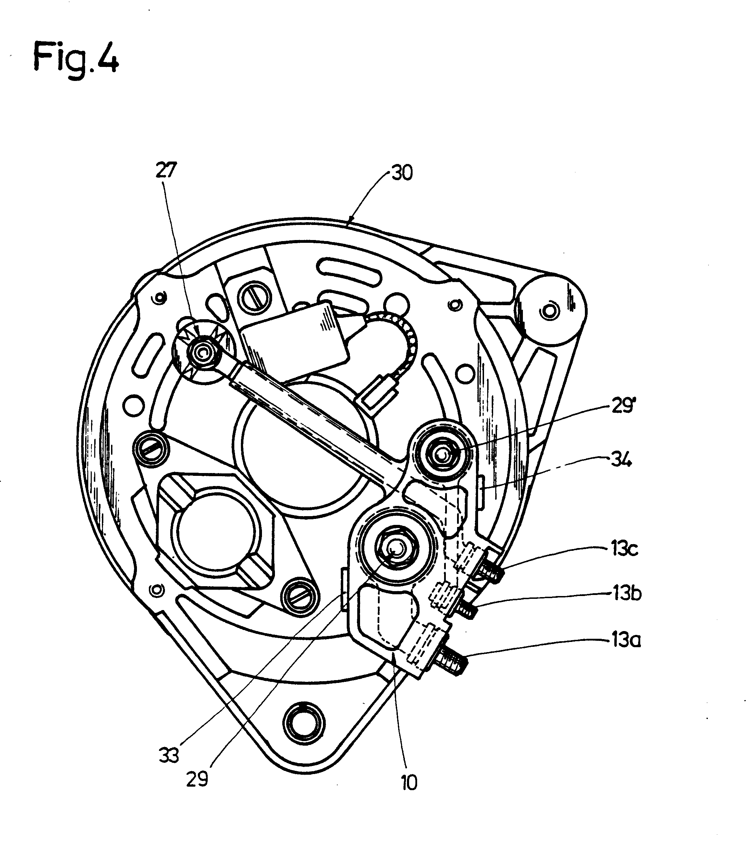

Ein Ausführungsbeispiel der Erfindung ist in der Zeichnung dargestellt und wird in der nachfolgenden Beschreibung näher erläutert. Es zeigen Fig. 1 den Adapter in Draufsicht, Fig. 2 in einer Ansicht von links
und Fig. 3 in einer Schnittdarstellung längs der Linie
III-III der Fig. 1, Fig. 4 den Adapter im an das

1916/ot/wi
31.7.85          - 4 -


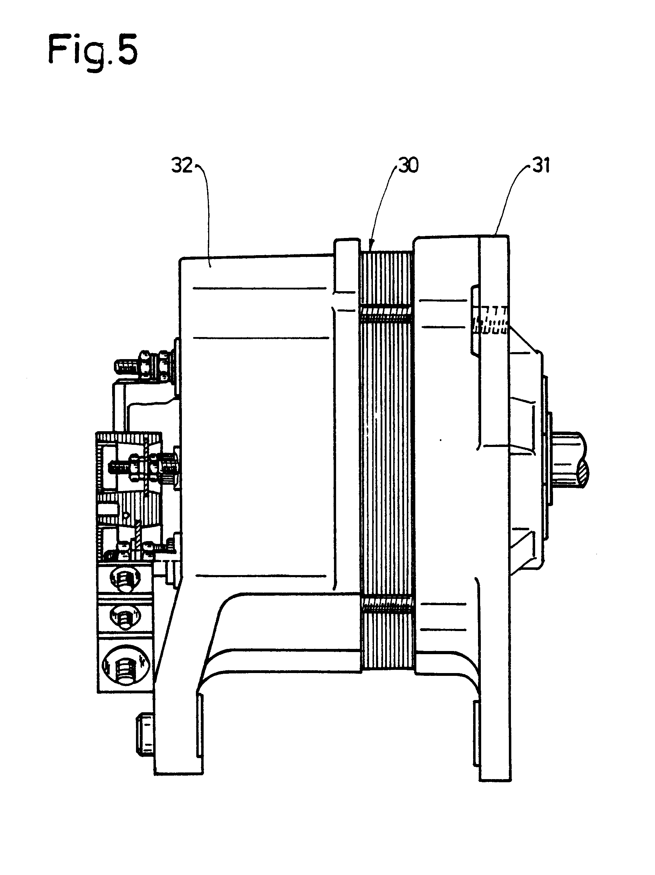

B-Lagerschild eines Drehstromgenerators montierten Zustand und die Fig. 5 die Darstellung der Fig. 4 in Seitenansicht.


Beschreibung der Ausführungsbeispiele


In Fig. 1 ist der als Formteil ausgebildete Adapter mit
10 bezeichnet; sein Körper bildet eine erste Fläche 11
in einer Ebene parallel zur Zeichenebene und eine zweite Fläche 12 senkrecht zur ersten Fläche 11. Das den
Körper des Adapters 10 bildende Formteil ist, wie die
Seiten- und Schnittdarstellungen der Fig. 2 und 3 zeigen, von in etwa gleichmäßiger Dicke,und eingelagert
sind in dem Kunststoffmaterial des Formteils elektrische metallische Leiter, die zueinander isoliert sind
und deren Anzahl der Anzahl der umzusetzenden Bolzenabgänge von  axial in radial entspricht.

Bei dem dargestellten Ausführungsbeispiel sind drei
elektrische Anschlüsse umzusetzen, nämlich der Anschluß B+, der Anschluß D+ und der Anschluß W,und daher sind drei, im folgenden als Ausgangsanschlüsse bezeichnete elektrische Abgänge 13a, 13b, 13c gebildet,
die aus der Fläche 12 herausragen, vorzugsweise
Schraubbolzenanschlüsse mit jeweils unterschiedlichen
Gewinden (beispielsweise M4, M5 und M6) sind,und im montierten Zustand am Generator (vgl. Fig. 4),wenn also
der Adapter-Formkörper mit seiner der Fläche 11 gegenüberliegenden und daher unteren Fläche auf die Stirnseite des B-Lagerschilds geschraubt ist, radial vom
Drehstromgenerator abstehen.

Folglich sind den drei elektrischen Ausgangsanschlüssen
13a, 13b, 13c drei - oder wenn mehr Anschlüsse benötigt
werden, eine entsprechend größere Anzahl - von elektrischen Zwischenanschlüssen zugeordnet.

Bei dem dargestellten Ausführungsbeispiel sind zwei
dieser Zwischenanschlüsse gebildet von Flachteilen 14a,
14b, die beispielsweise als flache metallische, vorgeformte und vorzugsweise sofort die jetzt aus den Zeichnungen ersichtliche Endform aufweisende Blechstücke
so in das Formteil des Adapters eingesetzt, beispielsweise bei dessen Spritzgußherstellung in die Form vorab
eingelegt und daher eng umgossen und umschlossen,
daß die Zwischenanschlüsse gleichzeitig auch der späteren Befestigung des Adapters am Generator dienen können.

Zu diesem Zweck erstrecken sich die elektrisch leitenden
(metallischen) Flachteile durch vorzugsweise kreisrunde
Freistellen 15a, 15b im Formteil und weisen jeweils eine
dann vorzugsweise zentrale Durchtrittsbohrung 16a, 16b
auf, die so positioniert sind, daß sie bei Aufsetzen
des Adapters auf den Drehstromgenerator auf an dieser
Stelle befindliche axiale Bolzenabgänge treffen, mit
denen sie dann vorzugsweise verschraubt werden. Hierauf
wird weiter unten noch eingegangen. Mit zunächst flachen Fortsetzungen 17 verlaufen dann die Blechteile von
den Ausnehmungen 15a, 15b innerhalb des Materials des
Formteils und daher elektrisch isoliert und auch sicher
gehalten jeweils zu dem zugeordneten weiterführenden
Außenanschluß, in diesem Fall also 13a und 13b, wo sie
noch vor Austritt in Form von Schraubbolzen eine Rundform mit flanschartigen mittleren Verdickungen, kragenartigen Einschnitten und ähnliches annehmen, wie dies am
besten der Darstellung der Fig. 1 in gestrichelter Linienführung entnommen werden kann und wodurch sich auch
die feste Verankerung in diesem Bereich im Material des
Formteils ergibt. Es versteht sich, daß es innerhalb
des erfindungsgemäßen Rahmens liegt, daß
die die Zwischenanschlüsse bildenden inneren Flachteile
auch mit den nach außen weisenden Rundteilen nicht im
einstückigen Übergang verbunden sein müssen, sondern
an diese auch später in beliebiger Weise angesetzt und
elektrisch leitend verbunden werden können.

Wie am besten die Darstellung der Fig. 3 zeigt, verfügt
das Formteil dort, wo dies möglich ist und ergänzend
zu den Ausnehmungen 15a, 15b, durch welche die axialen
Bolzenabgänge des Drehstromgenerators zur Verschraubung
zugänglich sind, noch über weitere Materialverdünnungen,
wie beispielsweise die Absenkungen 18, 19 oder 20. Um
ein Widerlager für das Aufschrauben der Kabelanschlüsse
an den jetzt radialen Schraubbolzenabgängen 13a, 13b,
13c zu bilden, treten, wie die Darstellung der Fig. 2
in Verbindung mit der Darstellung der Fig. 1 zeigt, die
Rundteile der metallischen, elektrischen Leiter innerhalbdes Formteils mit einem erweiterten Kragen 21 aus
dem Material des Formteils, genauer aus der Fläche 12
aus; dabei ist aus Gründen, die auf die jeweilige Bauart des mit einem solchen Adapter zu versehenden Generators zurückzuführen sind, der radiale Bolzenabgang
13c ebenfalls als Rundteil in der Form der anderen Teile ausgebildet, verfügt also auch über mindestens eine
Einschnürung 22 zur Erzielung eines festen Sitzes, setzt sich dann allerdings als mit einer (Kunststoff)Isolierung ummanteltes und am Rundteil 23 des radialen Bolzenabgangs in geeigneter Weise befestigtes, beispielsweise angeschweißtes, elektrisches Kabel fort, welches
zunächst, wie am besten der Darstellung der Fig. 3 bei
24 zu entnehmen, innerhalb des Formteils verläuft und
dann bei 25 aus diesem austritt (vgl. Fig. 1) und sich
noch um die erforderliche Länge weiter erstreckt, bis
es in einen ösenartigen Schraubanschluß 26 übergeht, der
an einer zu den unmittelbar den Adapter an den Bohrungen 16a, 16b der Flachteile durchsetzenden axialen Bolzenabgängen entfernten Stelle am Drehstromgenerator angeordnet ist. In Fig. 4 ist diese Stelle mit 27 bezeichnet.

Der Aufbau des Adapters 10 ergänzt sich noch durch die
Öffnungen 15a, 15b im Formkörper verschließende
Schutzkappen 27, 28, die über einstückige schmale Anhänger 27a, 28a am Adapterkörper befestigt sind und
von denen die Schutzkappe 27 in Fig. 1a im Querschnitt
ergänzend gezeigt ist. Der Konus der Schutzkappen ist
zu dem Konus der Bohrungen 15a, 15b passend.

Daher ist es möglich, nach dem Aufsetzen des Adapters
auf die Stirnfläche des B-Lagerschildes so, wie dies
in Fig. 4 gezeigt ist, bei welchem Aufsetzen die an
diesem Drehstromgenerator serienmäßig vorhandenen axialen Bolzenabgänge 29 und 30 die Bohrungen 16a, 16b der
Flachteile 14a, 14b durchsetzen, nach dem Verschrauben
diese Anschlüsse auch elektrisch isolierend abzudecken,
was zur Sicherheit beiträgt. Der in den Fig. 4 und 5
mit 30 bezeichnete Drehstromgenerator besteht in übli-

1916/ot/wi
31.7.85          - 8 -


cher Weise aus dem ventilatorseitigen A-Lagerschild 31
und dem schleifringseitigen B-Lagerschild 32, wobei der
Adapter normalerweise am B-Lagerschild 32 des Drehstromgenerators 30 befestigt wird, da an diesem Lagerschild
auch die Gleichrichterdioden über eine eigene Lagerplatte gehalten und daher die Spannungsabgänge auf dieser
Seite herausgeführt sind. Die Befestigung erfolgt primär durch festes Anziehen der Muttern an den beiden
axialen Schraubbolzenabgängen 29 und 30, die so sicher
zwischen sich die Flachteile 14a, 14b des Adapters einspannen. Es kann ergänzend vorteilhaft sein, an der äußeren Stirnfläche des B-Lagerschilds 32, wie in Fig. 4
gezeigt, schmale Begrenzungsleisten 33, 34 vorzugsweise
beidseitig des Adapters so anzubringen, daß dieser nach
Aufsetzen auf die axialen Bolzenabgänge auch seitlich
fixiert und gehalten ist. Diese schmalen Halteleisten 33,
34 stören nicht und können daher auch beim serienmäßigen
Drehstromgenerator mit beibehaltenen axialen Bolzenabgängen ohne weiteres vorgesehen sein.

Wie schon erwähnt, können die weiterführenden, jetzt
radialen elektrischen Anschlußabgänge 13a, 13b, 13c als
Schraubbolzenabgänge oder auch als Steckanschlüsse ausgebildet sein, je nach den Erfordernissen.

Alle in der Beschreibung, den nachfolgenden Ansprüchen
und der Zeichnung dargestellten Merkmale können sowohl
einzeln als auch in beliebiger Kombination miteinander
erfindungswesentlich sein.

**20227**

1916/ot/wi
31.7.85

<u>Firma Robert Bosch GmbH, 7000 Stuttgart 1</u>

<u>Patentansprüche</u>

1. Adapter für einen Drehstromgenerator zur Umstellung
   von als mit Bezug auf die Generatorlängsachse axiale
   (Bolzen)Abgänge ausgebildeten elektrischen Anschlüssen in radiale Abgänge, dadurch gekennzeichnet, daß
   in ein einstückiges Formteil Bohrungen (16a, 16b)
   zur festen Aufnahme der axialen Abgänge (Schraubbolzenanschlüsse 29, 30) aufweisende, elektrisch
   leitende Flachteile (14a, 14b) eingeformt sind, die
   einerseits das Formteil (10) am Generator (30) sichern, die elektrischen Zwischenverbindungen von
   axial auf radial herstellen und bis zu einer radial
   abschließenden Stirnwandung (12) des Formteils (10)
   geführt sind, wo sie in radial vorspringende (Bolzen)-
   Abgänge (13a, 13b) übergehen.

2. Adapter nach Anspruch 1, dadurch gekennzeichnet, daß
   die in das Material des Formteils mit eingegossenen
   Flachteile (14a, 14b) Blechstücke vorgegebenen Formverlaufs sind, die noch im Material des Formteils
   angrenzend an die Austrittsstirnwand für die radialen
   Abgänge in Rundteile (23) vorzugsweise einstückig

1916/ot/wi
31.7.85          - 2 -

übergehen, die     mindestens eine ringförmige Einschnürung(22) zur Erzielung eines festen Sitzes aufweisen und nach außen radiale Schraubbolzenanschlüsse
bilden.

3. Adapter nach Anspruch 1 oder 2, dadurch gekennzeichnet, daß die Flachteile (14a, 14b) dort, wo axiale
   Bolzenabgänge (29, 29') im Drehstromgenerator (30)
   sind, Durchtrittsöffnungen (15a, 15b) des Formteils
   durchsetzen und selbst Aufnahmebohrungen (16a, 16b)
   für die Schraubbefestigung der axialen Bolzenabgänge
   bilden.

4. Adapter nach einem der Ansprüche 1-3, dadurch gekennzeichnet, daß angrenzend an die Rundteile der radialen Bolzenabgänge (13a, 13b) ein weiteres Rundteil
   (23) in das Material des Formteils angrenzend an
   die radiale Austrittsstirnwandung (12) angeordnet
   ist, welches sich über ein innerhalb des Formteils
   verlaufendes elektrisches Kabel bis zu einem weiteren axialen Bolzenabgang im B-Lagerschild (32) des
   Drehstromgenerators (30) erstreckt.

5. Adapter nach einem der Ansprüche 1-4, dadurch gekennzeichnet, daß zur ergänzenden Fixierung des Formteils an der äußeren Stirnwand des B-Lagerteils, an
   welchem der Adapter befestigt ist, seitlich am
   Formteil anliegende, vorspringende Halteleisten
   (33, 34) angeordnet sind.

6. Adapter nach einem der Ansprüche 1-5, dadurch gekenn-

1916/ot/wi
31.7.85          - 3 -

zeichnet, daß die Durchgänge (Öffnungen 15a, 15b) im
Formteil für die Schraubbefestigung der axialen Bolzenabgänge von Schutzkappen (27) verschließbar sind,
die über Verlängerungen (27a, 28a) mit dem Hauptkörper des Formteils verbunden sind.

Fig.1

Fig.1a

20 227
0215299

# Fig.2

13a
21
13b
21
13c
21
10

# Fig.3

14a
19
18
16a
15a
24
20
16b
14b
15b

0215299

# Fig.4

Fig.5